# EUROPÄISCHE PATENTSCHRIFT

(11) **EP 2 306 477 B1**
(45) Veröffentlichungstag und Bekanntmachung des Hinweises auf die Patenterteilung: **03.07.2013**
(21) Anmeldenummer: 10185554.2
(22) Anmeldetag: 13.04.2006
(51) Int. Cl.: H01G 9/06, H01G 9/08, H01G 2/10

(54) **Leistungskondensator**
Power capacitor
Condensateur de puissance

(30) Priorität: 02.05.2005 DE 102005020320; 05.07.2005 DE 102005031366; 05.07.2005 DE 102005031367
(43) Veröffentlichungstag der Anmeldung: 06.04.2011
(62) Teilanmeldung aus: 06742243.6
(73) Patentinhaber: Epcos AG, 81669 München (DE)
(72) Erfinder: Hübscher, Wilhelm, 89547 Heldenfingen (DE); Grimm, Wilhelm, 91154 Roth (DE); Vetter, Harald, 89520 Heidenheim (DE)
(74) Vertreter: Epping - Hermann - Fischer

(56) Entgegenhaltungen:
- EP-B1- 0 598 256
- DE-A1- 2 157 690
- DE-A1- 19 845 821
- DE-C- 972 237
- DE-U1- 7 901 948

## Beschreibung

Es wird ein Leistungskondensator angegeben.

Ein Kondensator ist bekannt aus der Druckschrift EP 0 598 256 B1. DE 972 237 und DE 2 157 690 teigen Kondensatoren mit einem machanischen Federelement trischen Kondensatorwicklung und Kondensatorgehäuse. DE79019484 zeigt einen in einem Gehäuse angeordneten Kondensator mit zwischen Gehäuse und Kondensator angeordneten Kissenartigen Teilen aus elastichem Schaumstoff.

Eine zu lösende Aufgabe besteht darin, einen Leistungskondensator anzugeben, der gegen Vibrationen geschützt ist.

Die Aufgabe wird durch die Erfindung gemäß Patentanspruch 1 gelöst.

Es wird ein Leistungskondensator angegeben, der einen Kondensatorwickel und ein Gehäuse aufweist. Der Kondensatorwickel kann beispielsweise in einer MPM-Schichtwickeltechnik ausgeführt sein. Als Dielektrikum für den Schichtwickel kommt beispielsweise Polyester, PEN, PPS oder auch Polypropylene in Betracht. Es kommen auch Flachwickel und Rundwickel in Betracht.

In einer beispielhaften Ausführungsform kann ein Dielektrikum aus Polyester eine Dielektrizitätskonstante von 3,3 aufweisen. Ein Dielektrikum aus Polyester kann thermisch hoch stabil sein.

Es wird ein Leistungskondensator angeben, der vorzugsweise zur Aufnahmen eines hohen elektrischen Stroms geeignet ist. Der maximale Strom kann vorzugsweise zwischen 50 und 300 Ampere betragen.

Die Nennspannung des Leistungskondensators beträgt vorzugsweise zwischen 150 und 600 Volt.

In dem Gehäuse des Kondensators können eine oder auch mehrere Kondensatorwickel vorgesehen sein, die zur Kapazität des Kondensators beitragen. Beispielsweise können zwei Kondensatorwickel mit jeweils einer Kapazität von einem Millifarad übereinander gestapelt werden und mittels einer Parallelschaltung zu einer Nennkapazität C_{Nenn} = 2mF verschaltet werden. Die Kapazität kann aber auch andere Werte annehmen.

Die Filmdicke des im Schichtwickel enthaltenen Dielektrikums beträgt vorzugsweise einige Mikrometer, besonders bevorzugt circa 3 µm. Dadurch kann eine besonders große Kapazität bei geringem Platzbedarf und dennoch ausreichender Spannungsfestigkeit erreicht werden.

In einer besonderen Ausführungsform des Leistungskondensators ist ein Kondensatorwickel vorgesehen, der an zwei Seitenflächen mit einer Schoopschicht versehen ist. Dabei kann es sich vorzugsweise um eine flamm- oder lichtbogengespritzte metallische Schicht handeln, die vorzugsweise Zink oder einen Schichtaufbau, enthaltend eine Schicht mit Zink und eine weitere Schicht mit Zink sowie eine Schicht mit Kupfer enthält.

Durch eine geeignete Wahl der Geometrien von Kondensatorwickel, Schoopschicht und Gehäuse kann eine Kapazität zwischen den Kondensatorelementen und dem Gehäuse (auch Belag-Gehäuse-Kapazität) eingestellt werden, die zur Entstörung eines Umrichters geeignet und die allgemein günstige Eigenschaften hinsichtlich EMV (Elektromagnetische Verträglichkeit) aufweist.

In einer Ausführungsform des Leistungskondensators ist es vorgesehen, dass ein Wickel kontaktiert wird mittels zwei auf gegenüberliegenden Seiten des Schichtwickels angeordneten Kontaktschichten. Diese Kontaktschichten können beispielsweise Schoopschichten sein.

In einer Ausführungsform des Leistungskondensators sind in dem Kondensatorgehäuse mehrere Kondensatorwickel enthalten, wobei die jeweils an einem gemeinsamen äußeren Pol anzuschließenden Kontaktschichten der einzelnen Wickel auf der selben Seite des Leistungskondensators liegen.

Zwischen einem Kondensatorwickel und dem Gehäuse ist ein mechanisch federndes Element vorgesehen. Mit Hilfe eines solchen federnden Elementes kann beispielsweise die Volumenausdehnung des Kondensatorwickels bei Erwärmen aufgefangen werden. Zum anderen hat ein solches federndes Element aber auch den Vorteil, dass Vibrationen, wie sie beispielsweise beim Betrieb eines Kraftfahrzeugs auftreten, gedämpft werden können.

In einer bevorzugten Ausführungsform des Kondensators sind auf zwei gegenüberliegenden Seiten eines Kondensatorwickels mechanisch federnde Elemente angeordnet, so dass die mechanische Fixierung des Kondensatorwickels besonders gut gelingt. Die federnden Elemente könne auch allseitig in einer Umfangsrichtung angeordnet sein.

Erfindungsgemäß wird als mechanisch federndes Element ein so genanntes "Spring Pad" verwendet, welches aus einem Kunststoffschaum hergestellt ist. Die einzelnen Poren des Schaums bilden gasdichte, geschlossene Zellen, die mit einem Gas, beispielsweise CO₂, gefüllt sind. Ein solchermaßen hergestelltes "Spring Pad" hat den Vorteil, dass es sehr unempfindlich ist gegenüber Materialermüdung. Die Federeigenschaften werden nicht in erster Linie durch Kompression und Dekompression von einem Festkörper sondern durch die geschlossenen Gasblasen und damit durch Kompression bzw. Dekompression eines Gasvolumens bewirkt. Solche federnden Elemente haben eine Lebensdauer von vielen Jahren, ohne dass sie ihre federnden Eigenschaften durch Alterung oder andere Prozesse verlieren.

Mit Hilfe eines oder mehrerer federnder Elemente zwischen Kondensatorwickel und Gehäuse kann eine lagefeste Positionierung des Kondensatorwickels im Gehäuse erreicht werden. Für den Fall, dass das Gehäuse ein elektrischer Leiter ist kann so für eine weitgehend konstante Kapazität zwischen einer Kontaktschicht eines Kondensatorwickels und dem Gehäuse und damit für eine konstante und relativ genau einstellbare Belag-Gehäuse-Kapazität gesorgt werden, was den Vorteil von sehr günstigen Eigenschaften hinsichtlich EMV bzw. was für die Entstörung eines Umrichters verwendet werden kann.

In einer besonders bevorzugten Ausführungsform des Kondensators ist es vorgesehen, dass das Gehäuse die Form einer Wanne hat, wobei die Wanne einen Boden und beispielsweise vier Seitenwände sowie ein offenes oberes Ende aufweist. An den Seitenflächen der Wanne können Montageösen bzw. Montageelemente vorgesehen sein, mit deren Hilfe der Leistungskondensator an ein weiteres elektronisches Element montiert werden kann. Auf der Oberseite des Gehäuses kann auch eine umlaufende Nut zur Aufnahme eines Dichtungsrings vorgesehen sein.

Zur Fixierung eines Kondensatorwickels im Gehäuse kann eine isolierende Schale vorgesehen sein, die - gewissermaßen als zweite Wanne - in den unteren Bereich des Gehäuses eingelegt wird. In die isolierende Wanne wird dann der Kondensatorwickel eingelegt. Zum isolierenden Abschluss des Kondensators zum offenen Ende des Gehäuses hin wird eine zweite isolierende Schale auf der Oberseite aufgelegt.

In einer bevorzugten Ausführungsform ergänzen sich die untere und die obere Schale zu einem weitgehend geschlossenen Gehäuse.

Gemäß einer besonderen Ausführungsform des Kondensators kann es vorgesehen sein, dass die obere Schale Öffnungen aufweist, durch die die äußeren Kontaktelemente, bzw. Paare von Kontaktelementen hindurch treten können. An den Öffnungen der oberen Schale können elektrisch isolierende Krägen angeordnet sein, die zur Isolierung der äußeren Kontaktelemente dienen.

In einer anderen Ausführungsform des Kondensators kann es vorgesehen sein, dass die untere Isolierschale eine Strukturierung oder Profilierung ihrer Außenseite bzw. auch eine Strukturierung oder eine Profilierung ihrer Innenseite aufweist, wodurch die Reibung zwischen der isolierenden Schale und einem mechanisch federnden Element erhöht werden kann. Dadurch kann die Positionsfestigkeit bzw. die Lagestabilität des mechanisch federnden Elementes (d.h. des springpads), verbessert werden. Ein Verrutschen des Federelementes wird durch die Strukturierung oder Profilierung der Schale erschwert.

In einer besonders bevorzugten Ausführungsform des Kondensators ist auf der Oberseite eine Kühlfläche vorgesehen, die zum Kühlen des Kondensators dienen kann. Eine solche Kühlfläche kann besonders bevorzugt gebildet werden durch einen Blechstreifen bzw. eine Bandleitung. Eine solche Bandleitung kann z. B. aus zwei übereinanderliegenden, voneinander isolierten Blechstreifen gebildet sein, welche mit Aussenkontakten des Kondensators verbunden sind und zur Bestromung des Kondensatorwickels verwendet werden. Beispielsweise kann das Obere von zwei elektrisch leitenden Blechen als Kühlelement verwendet werden. Durch eine geeignete Ausbildung kann dafür Sorge getragen werden, dass das Obere der elektrisch leitenden Bleche hinreichend gut mit der oberen Kante des Gehäuses abschließt, womit für einen guten mechanischen Kontakt, bevorzugt für einen guten thermomechanischen Kontakt des oberen Blechs zu einem auf der Oberseite zu montierenden weiteren Gehäuse - das z. B. eine Kühlplatte bereitstellt - gesorgt werden kann.

Um die Gefahr eines Kurzschlusses zu reduzieren ist es vorteilhaft, wenn auf der Oberfläche des Kühlelementes noch eine elektrische Isolation angeordnet ist. Beispielsweise kann eine solche Isolation gebildet sein durch eine durchsichtige Isolierstofffolie, die beispielsweise nur wenige Mikrometer dick ist und somit den Wärmetransport nur unwesentlich behindert. In einer anderen Ausführungsform wird die elektrische Isolation durch die obere von zwei Isolierschalen gewährleistet, was im wesentlichen dadurch gelingt, dass die Wandstärke der Isolierschale ausreichend dünn gewählt wird. Die Wandstärke kann beispielsweise 0,3 mm betragen.

Die hier beschriebenen Gegenstände werden im folgenden anhand von Figuren näher erläutert.
- Figur 1: zeigt einen Kondenstor in einer perspektivischen Ansicht.
- Figur 2: zeigt beispielhaft die Konstruktion des Kondensators aus Figur 1.
- Figur 3: zeigt den oberen Teil einer Isolierschale als Konstruktionszeichnung.
- Figur 4: zeigt den unteren Teil einer Isolierschale als Konstruktionszeichnung.
- Figur 5: zeigt ein elektrisches Modul in einem schematischen Querschnitt.

Die in den Figuren angegebenen Maßangaben sind lediglich beispielhaft zu verstehen. Sie schränken die hier beschriebenen Gegenstände nicht ein. Gleich Elemente oder Elemente mit der gleichen Funktion sind mit gleichen Bezugszeichen bezeichnet.

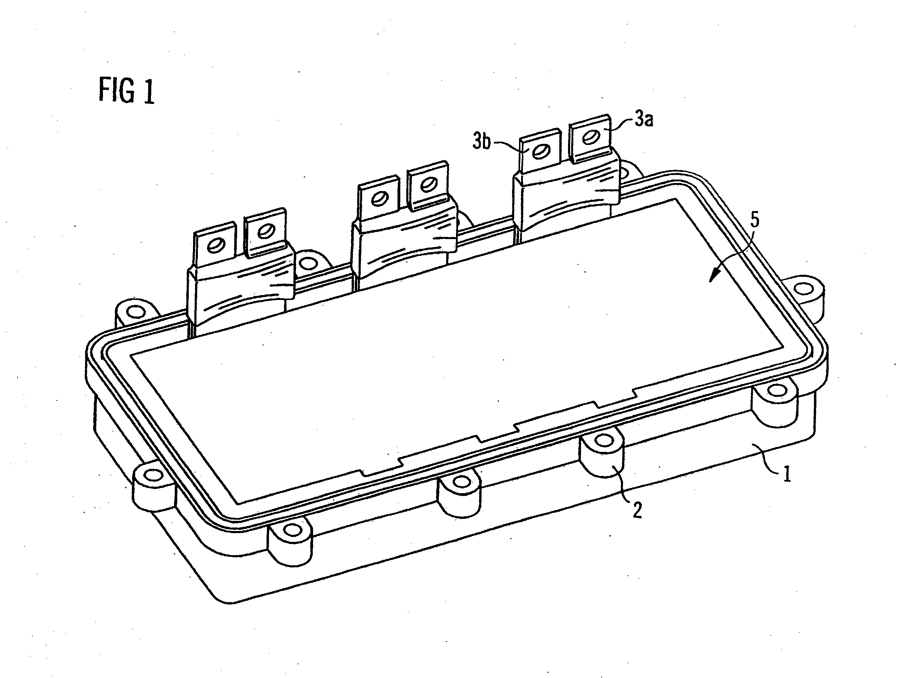

Figur 1 zeigt einen Kondensator mit einem Gehäuse 1, an dessen Oberseite in Umfangsrichtung mehrere Montageösen 2 angeordnet sind. Mit Hilfe der Montageösen 2 kann der Kondensator an eine weitere elektronische Einheit montiert werden. Eine solche Einheit ist beispielsweise in Figur 7 gezeigt.

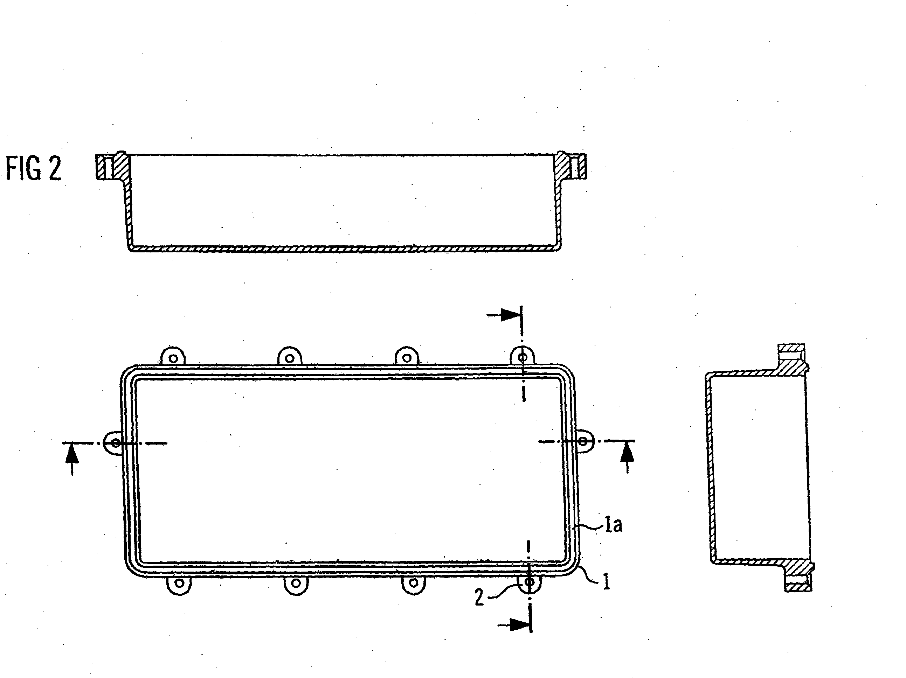

Figur 2 zeigt das Gehäuse als Konstruktionszeichnung. Das Gehäuse 1 kann beispielsweise aus Aluminium bestehen oder Aluminium enthalten. Die Länge des Gehäuses beträgt in etwa 25 cm. Die Breite des Gehäuses beträgt cirka 12 cm. Am Umfang des Gehäuses sind 10 Montageösen angeordnet. Die Anzahl der Montageösen kann aber variieren, je nachdem wie groß das Gehäuse ist und welche mechanische Stabilität für die Anbindung des Gehäuses an eine weitere elektronische Einheit gefordert wird. Die Tiefe des wannenförmigen Gehäuses beträgt etwa 6 cm. Auf der Oberseite des Gehäuses ist eine umlaufende Nut 1a angeordnet, die zur Aufnahme einer Dichtmasse beziehungsweise eines Dichtrings dient.

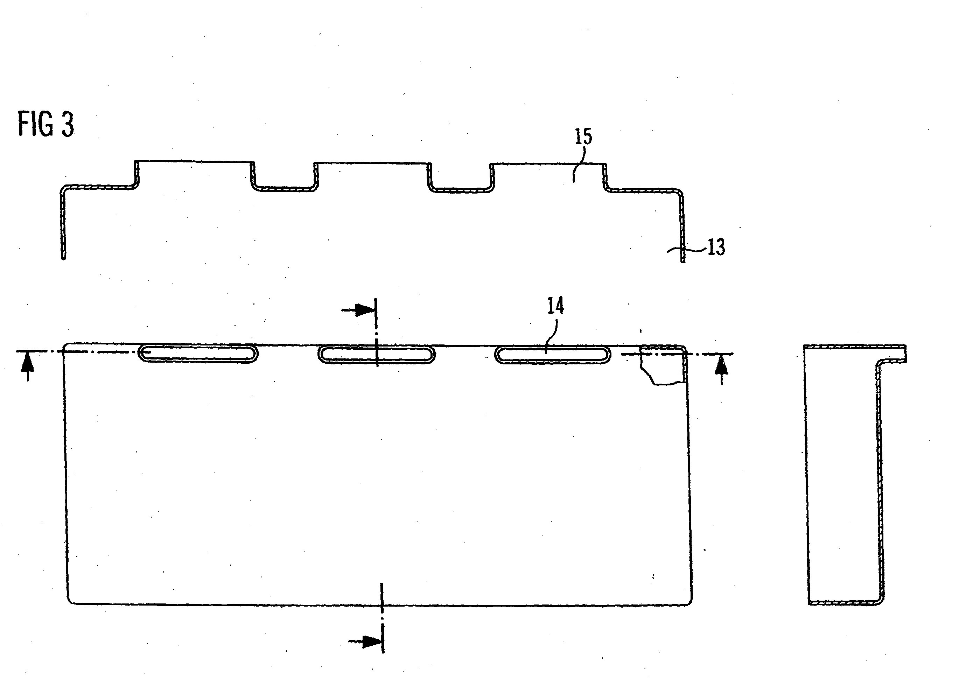

Die Figur 3 zeigt den oberen Teil einer isolierenden Schale, die zwischen dem oder den Kondensatorwickeln und dem Gehäuse des Kondensators angeordnet werden kann. Die Schale besteht vorzugsweise aus isolierendem Material, zum Beispiel Polycarbonat oder PP mit einer bevorzugten Dicke von 0,3 bis 0,5 mm. Die obere Halbschale 13 ist so geformt, dass sie quasi als Deckel über den Kondensatorwickel gelegt werden kann. Sie ist mit Langlöchern 14 versehen, durch die die Außenkontakte der Stromzuführungselemente hindurchragen können. Im Bereich der Löcher 14 können bevorzugt Krägen 15 angeordnet sein, die den unteren Bereich der Außenanschlüsse isolieren.

Die Wandstärke der oberen Halbschale 15 sollte zumindest im oberen (Deckel-)Bereich relativ dünn sein, um eine gute Kühlung von der Oberseite des Kondensators her zu gewährleisten.

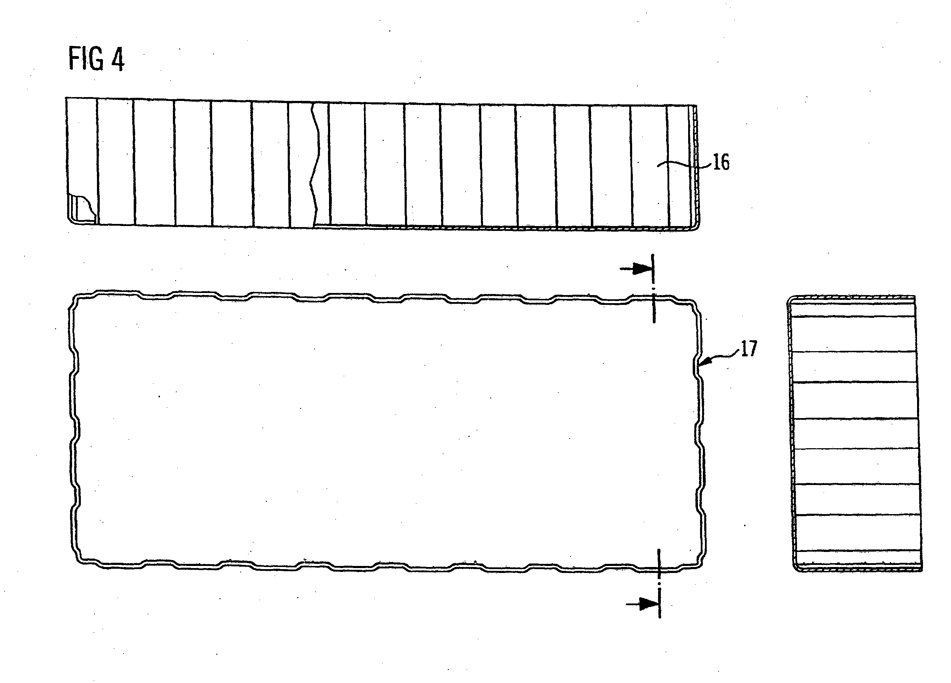

Figur 4 zeigt eine untere Halbschale 16, die vorzugsweise vor dem Einlegen der Kondensatorwickel in das Gehäuse eingelegt wird. Sie ist wie die obere Halbschale 13 vorzugsweise aus isolierendem Material gefertigt.

Die untere Halbschale ist mit einer Oberflächenprofilierung 17 ausgestattet, die in Figur 4 dargestellt ist. Die Oberflächenprofilierung kann sich sowohl auf die Außenseite als auch auf die Innenseite der isolierenden Schale beziehen.

Die Oberflächenprofilierung hat den Vorteil, dass das mechanisch federndes Element, das gegen die untere Halbschale und mithin gegen die Oberflächenstruktur drückt, aufgrund der erhöhten Reibung nicht so leicht verrutschen kann. Ein Verrutschen des Federelements kann dadurch gehemmt werden. Dabei kann das Federelement sowohl an der Außenwand der Schale 16 als auch an der Innenwand der Schale 16 liegen.

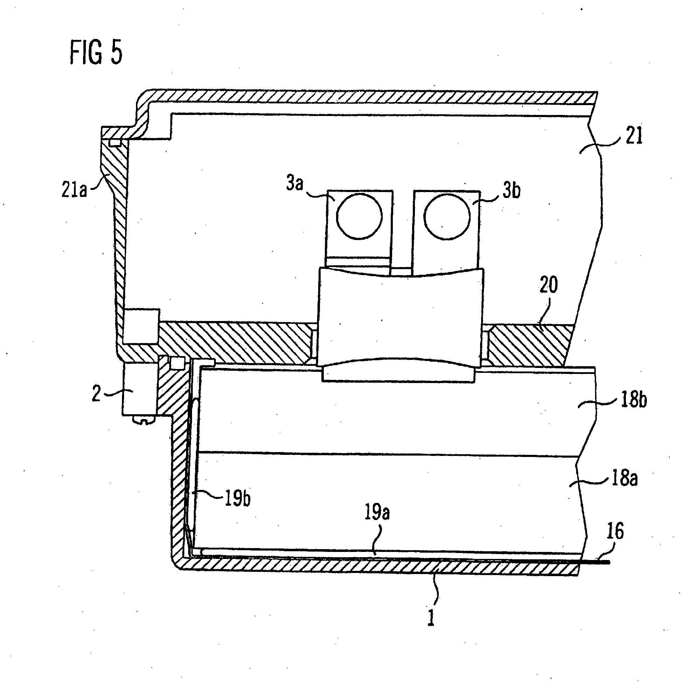

Figur 5 zeigt einen Kondensator als Bestandteil einer elektronischen Einheit, die beispielsweise ein Umrichter sein kann. Die elektronische Einheit 21 enthält dabei in einem Gehäuse 21a mehrere IGBT-Module. Auf der Unterseite des Gehäuses 21a ist ein Kondensator angeordnet, der beispielsweise durch Verschrauben mittels der Montageösen 2 an dem Gehäuse 21a befestigt ist.

Durch Löcher im Gehäuse 21a ragen die Außenanschlüsse 3a beziehungsweise 3b in das Innere der elektronischen Einheit 21. An der Unterseite des Gehäuses 21a ist eine Kühlplatte 20 vorgesehen, die zum Abtransport von Wärme geeignet ist. Die Unterseite der Kühlplatte 20 steht dabei in direktem thermischen Kontakt mit den Elementen des Kondensators, insbesondere mit der den oberen Abschluss des Kondensators bildenden Oberseite der oberen Halbschale gemäß Figur 5. Die Oberseite des Kondensators kann aber auch gebildet werden durch eine durchsichtige isolierende Folie gemäß Figur 1, insbesondere für den Fall, dass im Kondensator keine isolierenden Halbschalen angeordnet sind, sondern dass die Kondensatorwickel durch einen Verguss in dem Gehäuse des Kondensators gehalten werden.

In Figur 5 wird die Kapazität des Kondensators im wesentlichen gebildet durch zwei Kondensatorwickel 18a, 18b, die übereinander in das Gehäuse eingelegt sind. Zwischen den Kondensatorwickeln und dem Gehäuse 1 des Kondensators ist noch eine isolierende Halbschale 16 in Form einer unteren Halbschale angeordnet. Zwischen der unteren Halbschale 16 und den Kondensatorwickeln sind Federelemente angebracht. Bodenseitig ist dabei das Federelement 19a angebracht und wandseitig das Federelement 19b. In einer besonders bevorzugten Ausführungsform des Kondensators sind die Federelemente allseitig angebracht.

Durch die Federelemente können die Kondensatorwickel vibrationsarm im Gehäuse gehalten werden. Das bodenseitige Federelement 19a erfüllt dabei noch eine andere Funktion. Indem es die Kondensatorwickel 18a, 18b und die darüber befindlichen Elemente nach oben drückt, kann für einen verbesserten Wärmekontakt der Kühlplatte 20 mit den den oberen Abschluss des Kondensators bildenden Elementen gesorgt werden. Dadurch wird die Abfuhr von Verlustwärme des Kondensators verbessert.

### Bezugszeichenliste

- 1: Gehäuse
- 1a: Vertiefung
- 2: Montageöse
- 3a: Außenanschluss der ersten Polarität
- 3b: Außenanschluss der zweiten Polarität
- 4a, 4b: Kontaktlöcher
- 5: Isolierfolie
- 13: Obere Halbschale
- 14: Langloch
- 15: Kragen
- 16: untere Halbschale
- 17: Oberflächenprofilierung
- 18a, 18b: Kondensatorwickel
- 19a, 19b: Federelement (Spring-Pad)
- 20: Kühlplatte
- 21: Elektrische Einheit
- 21a: Gehäuse

## Patentansprüche

1. Leistungskondensator mit einem Gehäuse (1) und wenigstens einem Kondensatorwickel (18a, 18b),
wobei zwischen dem Gehäuse (1) und dem Kondensatorwickel (18a, 18b) ein mechanisches Federelement (19a, 19b) angeordnet ist, **dadurch gekennzeichnet, dass** das mechanische Federelement (19a, 19b) als Spring-Pad ausgebildet ist, welches aus einem Kunststoffschaum hergestellt ist.

2. Leistungskondensator nach Anspruch 1, wobei auf zwei gegenüber liegenden Seiten eines Kondensatorwickels (18a, 18b) jeweils wenigstens ein mechanisches Federelement (19a, 19b) angeordnet ist.

3. Leistungskondensator nach einem der Ansprüche 1 oder 2, wobei zur mechanischen Fixierung eines Federelements (19a, 19b) eine profilierte Isolierschale zwischen Kondensatorwickel (18a, 18b) und Gehäuse (1) vorgesehen ist.

## Claims

1. Power capacitor having a housing (1) and at least one capacitor winding (18a, 18b), wherein a mechanical spring element (19a, 19b) is arranged between the housing (1) and the capacitor winding (18a, 18b), **characterized in that** the mechanical spring element (19a, 19b) is in the form of a spring pad which is produced from a plastic foam.

2. Power capacitor according to Claim 1, wherein at least one mechanical spring element (19a, 19b) is in each case arranged on two opposite sides of a capacitor winding (18a, 18b).

3. Power capacitor according to either of Claims 1 and 2,
wherein a profiled insulating shell is provided between the capacitor winding (18a, 18b) and the housing (1) for the purpose of mechanically fixing a spring element (19a, 19b).

## Revendications

1. Condensateur de puissance comprenant un boîtier (1) et au moins une bobine de condensateur (18a, 18b), un élément à ressort mécanique (19a, 19b) étant disposé entre le boîtier (1) et la bobine de condensateur (18a, 18b), **caractérisé en ce que** l'élément à ressort mécanique (19a, 19b) est réalisé sous forme de plage élastique qui est fabriquée en mousse synthétique.

2. Condensateur de puissance selon la revendication 1, dans lequel à chaque fois au moins un élément à ressort mécanique (19a, 19b) est disposé sur deux côtés opposés d'une bobine de condensateur (18a, 18b).

3. Condensateur de puissance selon l'une quelconque des revendications 1 ou 2, dans lequel on prévoit pour la fixation mécanique d'un élément à ressort (19a, 19b) une coque d'isolation profilée entre la bobine de condensateur (18a, 18b) et le boîtier (1).
